# EUROPÄISCHE PATENTSCHRIFT

(11) **EP 3 331 809 B1**
(45) Veröffentlichungstag und Bekanntmachung des Hinweises auf die Patenterteilung: **02.10.2019**
(21) Anmeldenummer: 16751272.2
(22) Anmeldetag: 05.08.2016
(51) Int. Cl.: B66F 7/22, B62D 65/18, B65G 7/08

(54) **FAHRERLOSE TRANSPORTVORRICHTUNG ZUR MONTAGE EINES KRAFTFAHRZEUGS UND VERFAHREN ZUM ABLADEN EINES KRAFTFAHRZEUGS VON EINEM SOLCHEN TRANSPORTFAHRZEUG**
DRIVERLESS TRANSPORT DEVICE FOR ASSEMBLING A MOTOR VEHICLE AND METHOD FOR UNLOADING A MOTOR VEHICLE FROM A TRANSPORT VEHICLE OF THIS TYPE
DISPOSITIF DE TRANSPORT SANS CONDUCTEUR POUR LE MONTAGE D'UN VÉHICULE AUTOMOBILE ET PROCÉDÉ DE DECHARGEMENT D'UN VÉHICULE AUTOMOBILE D'UN TEL VÉHICULE DE TRANSPORT

(30) Priorität: 06.08.2015 DE 102015214980
(43) Veröffentlichungstag der Anmeldung: 13.06.2018
(73) Patentinhaber: Universität Stuttgart, 70174 Stuttgart (DE)
(72) Erfinder: HOFMANN, Matthias, 73333 Gingen (DE)
(74) Vertreter: DREISS Patentanwälte PartG mbB
(86) Internationale Anmeldenummer: PCT/EP2016/068805
(87) Internationale Veröffentlichungsnummer: WO 2017/021547

(56) Entgegenhaltungen:
- WO-A1-2009/113268
- DE-A1- 3 807 796
- DE-U1- 29 724 417
- US-A1- 2012 285 797

## Beschreibung

Die vorliegende Erfindung betrifft eine fahrerlose Transportvorrichtung zur Montage eines Kraftfahrzeugs, mit einer fahrbaren Basis und einem mit der Basis gekoppelten und sich in einer Längsrichtung erstreckenden Fahrzeugträger. Zudem betrifft die vorliegende Erfindung ein Verfahren zum Abladen eines Kraftfahrzeugs von einer zur Montage eines Kraftfahrzeugs dienenden fahrerlosen Transportvorrichtung.

Aus dem Stand der Technik sind Transportvorrichtungen zur Montage eines Kraftfahrzeuges bekannt. Hierbei handelt es sich um selbstfahrende mobile Montageplattformen, welche beispielsweise eine Karosserie eines Kraftfahrzeuges tragen und diese zu Montagestationen transportieren können.

Ebenfalls bekannt sind fahrbare Montagevorrichtungen für zu montierende Fahrzeugaggregate. Beispielsweise ist aus der DE 10 2012 107 511 A1 eine Montagevorrichtung mit einer eine Fahreinrichtung aufweisenden Tragstruktur und einem Aggregateträger zum Halten eines Aggregats bekannt, wobei der Aggregateträger angehoben werden kann. Damit sind ein automatischer Transport und ein Anheben eines Aggregats zu Montagezwecken ermöglicht.

Allerdings ist bei solchen Transport- und Montagevorrichtungen von Nachteil, dass für eine Handhabung der Fahrzeuge oder Fahrzeugkomponenten und insbesondere für deren Abladen zusätzliche Handhabungsmittel notwendig sind, beispielsweise Hubbühnen oder Hängebahnen. Dies schränkt die Flexibilität in der Fertigung ein, da die verfahrbaren Transportvorrichtungen ortsfeste Abladestationen anfahren müssen. Sind nicht genügend Abladestationen vorhanden, entsteht ein Rückstau, der die Fertigung beeinträchtigen kann.

DE 297 24 417 U1 zeigt ein Flurförderzeug mit Merkmalen des Oberbegriffs von Anspruch 1. Aus DE 38 07 796 A1 ist eine Kippvorrichtung für Fahrzeuge bekannt. WO 2009/113268 A1 zeigt eine Vorrichtung zum Befördern von Fahrzeugen mit einem Förderer.

Der vorliegenden Erfindung liegt die Aufgabe zugrunde, mit einfachen konstruktiven Mitteln eine flexible Fertigung mit einer Transportvorrichtung zu ermöglichen.
Die Erfindung löst die voranstehende Aufgabe mit den Merkmalen des Anspruchs 1. Danach zeichnet sich die Transportvorrichtung dadurch aus, dass der Fahrzeugträger betätigbare Aufnahmepunkte zum Tragen des Kraftfahrzeugs aufweist, dass der Fahrzeugträger entlang seiner Längsrichtung mittels einer Führungseinrichtung relativ zur Basis verlagerbar und um eine orthogonal zur Längsrichtung orientierte Achse kippbar ist, so dass das zumindest teilmontierte Kraftfahrzeug bei vom Kraftfahrzeug gelösten Aufnahmepunkten auf seinen eigenen Rädern vom Fahrzeugträger abfahren kann.

Mit der Transportvorrichtung gemäß der Erfindung kann die Flexibilität in der Fertigung erhöht werden. So kann das Kraftfahrzeug von der Transportvorrichtung getragen und individuell zu bestimmten Fertigungsstationen transportiert werden. Einzelne, beispielsweise teilmontierte Kraftfahrzeuge können aus der Produktion entnommen und zwischengelagert werden. Die Basis der Transportvorrichtung ist auf einem Untergrund, beispielsweise dem Boden einer Fertigungsanlage, frei verfahrbar. Von besonderem Vorteil ist zudem, dass das Kraftfahrzeug ohne Ladehilfsmittel auf seinen eigenen Rädern von der Transportvorrichtung abfahren oder abrollen kann. Insoweit verfügt die Transportvorrichtung über eine integrierte Abladeeinrichtung. Ladehilfsmittel zum Abladen, beispielsweise ortsfeste Entladestationen, sind nicht erforderlich und müssen mit der Transportvorrichtung auch nicht angefahren werden, was flexible Wege innerhalb der Fertigung ermöglicht.

Der Fahrzeugträger ist zum Abladen des Kraftfahrzeugs in seiner Längsrichtung relativ zur Basis verlagert und um eine orthogonal zur Längsrichtung orientierte Achse gekippt. Zudem sind die betätigbaren Aufnahmepunkte des Fahrzeugträgers vom Kraftfahrzeug gelöst. Das Kraftfahrzeug kann auf seinen eigenen Rädern vom Fahrzeugträger abfahren. Dabei kann das Kraftfahrzeug nicht nur auf den Untergrund abgeladen, sondern auch auf eine Ebene auf anderer Höhe, beispielsweise ein Lagerregal, übergeben werden. Dies kann je nach Höhe der anderen Ebene, beispielsweise des Lagerregals, auch ohne Abkippen des Fahrzeugträgers erfolgen.

Bei der fahrerlosen Transportvorrichtung handelt es sich insbesondere um ein fahrerloses Transportfahrzeug (FTF).

Zum Verlagern des Fahrzeugträgers relativ zur Basis kann ein Antrieb, beispielsweise ein Kettenantrieb oder ein Zahnstangenantrieb, vorgesehen sein. Ein solcher Antrieb kann zwischen Fahrzeugträger und Basis oder zwischen Fahrzeugträger und einem der Basis zugeordneten Hubtisch wirken. Bei Wirken des Antriebs zwischen Fahrzeugträger und Hubtisch ist auch bei angehobenem Hubtisch eine Verlagerung des Fahrzeugträgers in seiner Längsrichtung möglich, zumindest über einen Teil der maximalen Verlagerungsstrecke. Zum Kippen des Fahrzeugträgers kann ein auf Zug und Druck belastbarer Hubzylinder vorgesehen sein. Der Hubzylinder kann einerseits mit der Basis und andererseits mit dem Fahrzeugträger gekoppelt sein.

Der Begriff "Kraftfahrzeug" schließt Fahrzeuge, Automobile und Nutzfahrzeuge mit ein. Wenngleich hier überwiegend auf Automobile Bezug genommen wird, lassen sich die beschriebenen Schritte und deren Vorteile auch bei Nutzfahrzeugen erzielen. Bei dem Kraftfahrzeug kann es sich auch um ein "Rolling Chassis" handeln, in das kein Motor eingebaut ist. Als Motor kann ein Verbrennungsmotor oder ein Elektromotor dienen.

In vorteilhafter Weise kann der Fahrzeugträger mittels eines relativ zur Basis höhenverstellbaren Hubtisches an der Basis gekoppelt sein. Auf diese Weise kann das Kraftfahrzeug durch die Transportvorrichtung angehoben werden, so dass auch Arbeiten in unteren Abschnitten des Fahrzeugs oder Arbeiten unter dem Fahrzeug vorgenommen werden können. Ergonomische Arbeitspositionen für die am Kraftfahrzeug arbeitenden Werker lassen sich erreichen.

In weiter vorteilhafter Weise kann der Fahrzeugträger mittels eines Hubtischkopfs am Hubtisch gekoppelt, insbesondere geführt, sein. Damit lässt sich eine stabile Anbindung des Fahrzeugträgers am Hubtisch erzielen. Dadurch, dass der Hubtischkopf geringere Abmessungen als der Hubtisch aufweist, wird der Verlagerungsbereich des Fahrzeugträgers relativ zur Basis oder zum Hubtisch begünstigt. Weiter ist es von Vorteil, wenn der Hubtischkopf relativ zur Basis oder zum Hubtisch verschwenkbar ist, insbesondere um eine orthogonal zum Hubtisch (Hubtischebene) ausgerichtete Achse. Damit kann der Fahrzeugträger und somit auch das Fahrzeug relativ zur Basis verschwenkt werden, was zur Zugänglichmachung von Montagepositionen oder zur Verbesserung der Ergonomie während der Montage genutzt werden kann. Zum Antrieb des Schwenkvorgangs kann ein Drehantrieb dienen. Hierfür können ein Antriebsmotor mit Antriebsritzel am Hubtisch und ein Zahnkranz am Drehkopf befestigt sein. Außerdem ist denkbar, dass eine Verlagerung des Fahrzeugträgers entlang seiner Längsrichtung bei verschwenktem Hubtischkopf aus Gründen der Kippsicherheit blockiert oder zumindest begrenzt ist.

Im Rahmen einer bevorzugten Ausgestaltung kann der Hubtisch relativ zur Basis kippbar ausgebildet sein. Auch auf diese Weise können Arbeiten in unteren Abschnitten des Fahrzeugs oder unter dem Fahrzeug vorgenommen werden. Dadurch kann durch ergonomische Arbeitspositionen die Ergonomie für die am Kraftfahrzeug arbeitenden Werker weiter optimiert werden. Denkbar ist, dass der Hubtisch um eine zur Längsrichtung der Transportvorrichtung parallele Achse oder um eine zur Längsrichtung der Transportvorrichtung orthogonale Achse verschwenkbar oder kippbar ist. Damit kann der Hubtisch und somit der Fahrzeugträger zu den Seiten oder zu den Enden der fahrbaren Basis gekippt werden. Ein Verkippen oder Verschwenken des Hubtisches kann dabei durch unterschiedlich weites Ausfahren von Hubsäulen oder Hubzylindern erfolgen, die "Tischbeine" des Hubtisches bilden. Dabei können die Hubsäulen/Hubzylinder jeweils mittels eines Schwenklagers gelenkig am Tischflächenelement ("Tischplatte") gelagert sein, bspw. am "Auge" des Hubzylinders. Alternativ oder ergänzend kann zwischen Hubtisch und Hubtischkopf eine Schwenkeinrichtung vorgesehen sein. Damit ist ein noch größerer Kippbereich des Fahrzeugträgers ermöglicht.

Zweckmäßigerweise kann der Fahrzeugträger mindestens einen sich quer oder schräg zu seiner Längsrichtung erstreckenden und relativ zum Fahrzeugträger in Längsrichtung verschieblich geführten Querträger aufweisen, an dem die Aufnahmepunkte, zumindest ein Teil der Aufnahmepunkte, angeordnet sind. Durch Verschieben der Querträger kann der Fahrzeugträger an verschiedene Kraftfahrzeuge angepasst werden. Beispielsweise können die Querträger am Fahrzeugträger derart verschoben werden, dass diese das Kraftfahrzeug an seinen Wagenheberaufnahmen trägt. Außerdem kann durch Verlagern oder Verschieben des mindestens einen Querträgers entlang der Längsrichtung des Fahrzeugträgers eine aktive Förderung des Kraftfahrzeugs erfolgen, wodurch ein Abfahrvorgang des Kraftfahrzeugs vom Fahrzeugträger unterstützt werden kann.

Im Konkreten können die Aufnahmepunkte in Längsrichtung der Querträger verschieblich geführt sein, um die Aufnahmepunkte an Fahrzeuge mit unterschiedlicher Fahrzeugbreite oder mit unterschiedlich positionierten Wagenheberaufnahmen anpassen zu können. Zudem können die Aufnahmepunkte relativ zum Querträger höhenverstellbar sein, um das Kraftfahrzeug aufnehmen oder freigeben zu können, insbesondere dann, wenn das Fahrzeug auf seinen eigenen Rädern steht. Zur Höheneinstellung relativ zum Querträger können die Aufnahmepunkte jeweils eine Hubspindel aufweisen.

In vorteilhafter Weise kann der Fahrzeugträger an einem Ende, insbesondere am abkippbaren Ende, einen sich verjüngenden, als Abfahrrampe dienenden Abschnitt aufweisen. Hiermit kann das Kraftfahrzeug ohne weitere Hilfsmittel vom Fahrzeugträger abfahren.

Zweckmäßigerweise kann der Fahrzeugträger Halter für zu montierende Komponenten des Kraftfahrzeugs aufweisen. Somit können Aggregate für das Kraftfahrzeug, beispielsweise ein Motor oder ein Getriebe, getragen und in ein Fahrzeug eingebaut werden. Ähnlich wie die Querträger können auch die Halter für zu montierende Komponenten in Längsrichtung des Fahrzeugträgers verschieblich geführt sein. Weiter können die Halter für zu montierende Komponenten höhenverstellbar sein, beispielsweise mittels Hubspindeln.

Zweckmäßigerweise kann der Fahrzeugträger einen in Längsrichtung verfahrbaren Schlitten mit mindestens einer Radaufnahme, vorzugsweise zwei Radaufnahmen, zum Verlagern des Kraftfahrzeugs relativ zum Fahrzeugträger aufweisen. Damit kann ein Abladen des Kraftfahrzeugs unterstützt werden, da der verfahrbare Schlitten das Kraftfahrzeug mittels der Radaufnahmen trägt und durch Verlagerung in Längsrichtung des Fahrzeugträgers von diesem herunter führt. Die Radaufnahmen können als Sicherungs-/Unterfahrkeil ausgebildet sein. Die Radaufnahmen können in Längsrichtung des Schlittens verstellt und damit auf Fahrzeuge mit unterschiedlicher Achsbreite adaptiert werden.

Denkbar ist außerdem, dass der Schlitten mittels am Fahrzeugträger angeordneten und in Längsrichtung des Fahrzeugträgers orientierten Schlittenschienen und am Schlitten angeordneten Schlittenführungen, die auf den Schlittenschienen laufen, geführt ist. Zur Verlagerung des Schlittens entlang des Fahrzeugträgers kann ein Schlittenantrieb vorgesehen sein, beispielsweise in Form eines Kettenantriebs, eines Zahnstangenantriebs oder eines Spindelantriebs. Zudem ist denkbar, dass der Schlitten an seinem in Richtung des abkippbaren Endes des Fahrzeugträgers orientierten Ende einen Keilabschnitt zur Übergabe des Fahrzeugs von den Lastaufnahmepunkten am Querträger auf den Schlitten aufweist.

Im Konkreten kann die Führungseinrichtung eine am Fahrzeugträger angeordnete Profilschiene und eine an der Basis angeordnete Ausnehmung zur Führung der Profilschiene aufweisen. Damit ist der Fahrzeugträger bei Auflage auf der Basis, insbesondere also bei abgesenktem Hubtisch, in Längsrichtung geführt. Dabei kann die Ausnehmung eine konstante Breite aufweisen oder - mit anderen Worten - nach oben hin "offen" sein, so dass der Fahrzeugträger in seitlicher Richtung geführt ist, jedoch in Längsrichtung der Ausnehmung verschoben und damit auch relativ zur Basis gekippt werden kann. Die Ausnehmung kann als Längsnut ausgebildet sein. Hierdurch ist bei einem Abkippen eine zuverlässige Führung des Fahrzeugträgers an der Basis erreicht.

Zweckmäßigerweise weist die Führungseinrichtung eine am Hubtisch, insbesondere am Hubtischkopf, angeordnete, zur Profilschiene komplementäre Aufnahme auf, die lediglich eine Längsverschiebung der Profilschiene erlaubt. Mit anderen Worten kommt es zu einem "Hintergriff" zwischen Profilschiene und komplementärer Aufnahme, so dass zwischen Hubtisch, insbesondere Hubtischkopf, und Fahrzeugträger lediglich eine Längsverschiebung ermöglicht ist. Insbesondere ist ein Verkippen des Fahrzeugträgers in seiner Längs- und/oder Querrichtung vermieden.

Zur Erleichterung eines Abkippens des Fahrzeugträgers gegenüber der Basis ist von Vorteil, wenn der Fahrzeugträger nicht über seine komplette Verlagerungslänge hinweg eine Profilschiene aufweist. Damit kann der Fahrzeugträger vom Hubtisch, insbesondere vom Hubtischkopf, entkoppelt werden, nämlich indem Profilschiene und Aufnahme außer Eingriff gelangen. Der Fahrzeugträger kann damit auf einfache Weise relativ zur Basis verkippt und beispielsweise mittels an der Basis ausgebildeten Ausnehmungen geführt werden. Wie zuvor bereits erläutert, kann ein Kippen des Fahrzeugträgers durch einen Hubzylinder erfolgen.

In vorteilhafterweise kann die Basis an mindestens zwei Seiten, vorzugsweise umlaufend an der Basis, eine Plattform für Personal, Werkzeug und/oder zu montierende Komponenten aufweisen. Hiermit ist die Flexibilität in der Fertigung begünstigt, da das Kraftfahrzeug mittels der Transportvorrichtung nicht nur zur definierten Montagestationen verfahren werden kann, sondern auch während der Fahrt der Transportvorrichtung Montagearbeiten stattfinden können.

Zweckmäßigerweise kann die Basis mindestens zwei Radachsen mit jeweils zwei individuell, insbesondere radselektiv, antreibbaren Rädern und/oder einen Energiespeicher zur Energieversorgung aufweisen. Die Radachsen können in zwei Antriebsabschnitten der Basis angeordnet sein, beispielsweise als Drehschemel-Radachsen. Diese Antriebsabschnitte können jeweils von einem Gehäuse verkleidet sein.

Zwischen den Antriebsabschnitten kann sich ein Verbindungsabschnitt der Basis erstrecken, in dem der Hubtisch angeordnet sein kann. Mittels der Radachsen kann die Transportvorrichtung auf einem Untergrund frei, das heißt auch seitlich, schräg oder quer, verfahren werden. Der Energiespeicher kann als Akku oder Batterie ausgebildet sein und die Transportvorrichtung netzunabhängig mit Energie versorgen.

Die eingangs genannte Aufgabe wird auch durch ein Verfahren zum Abladen eines Kraftfahrzeugs mit den Merkmalen des nebengeordneten Patentanspruchs gelöst. Zur Vermeidung von Wiederholungen sei hinsichtlich der mit diesem Verfahren erzielbaren Vorteile auf die diesbezüglichen Ausführungen zur erfindungsgemäßen Transportvorrichtung verwiesen.

Das im nebengeordneten Patentanspruch enthaltene Merkmal eines Kippens des Fahrzeugträgers ist optional. So ist ein Kippen des Fahrzeugträgers dann nötig, wenn das Kraftfahrzeug beispielsweise auf eine unterhalb des Fahrzeugträgers befindliche Ebene, insbesondere den Untergrund, abgeladen werden soll. Wird das Kraftfahrzeug nicht auf den Untergrund, sondern auf eine vom Untergrund verschiedene Ebene mit anderer Höhe innerhalb des Hubbereichs des Hubtisches übergeben oder überladen, ist kein Abkippen des Fahrzeugträgers erforderlich. Der Fahrzeugträger kann sich dann in im Wesentlichen horizontaler Ausrichtung befinden.

Zur weiteren Ausgestaltung des Verfahrens zum Abladen eines Kraftfahrzeugs können die im Rahmen der Transportvorrichtung beschriebenen Maßnahmen dienen, die sich auch in verfahrensmäßiger Hinsicht lesen lassen.

Die Erfindung wird im Folgenden anhand der Figuren näher erläutert. Es zeigen:
- Fig.1: in einer schematischen Ansicht eine Ausführungsform einer fahrerlosen Transportvorrichtung;

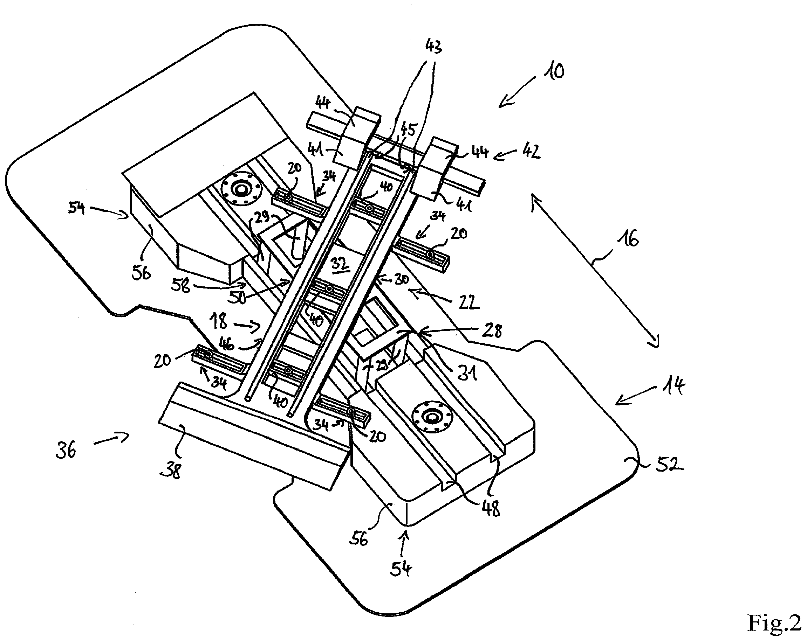

- Fig.2: die fahrerlose Transportvorrichtung aus Fig.1 mit verschwenktem Fahrzeugträger;
- Fig.3a,b: in mehreren geschnittenen Teilansichten (Schnitte A-A und B-B entlang der Achsen in Fig.1) die Profilschiene des Fahrzeugträgers in einer Ausnehmung und einer Aufnahme;
- Fig.4a,b: in schematischen Seitenansichten einen ersten und einen zweiten Schritt eines Abladens des Kraftfahrzeugs von der Transportvorrichtung;
- Fig.5a,b: in schematischen Seitenansichten einen dritten und einen vierten Schritt eines Abladens des Kraftfahrzeugs von der Transportvorrichtung;
- Fig.6a,b: in schematischen Seitenansichten einen fünften und sechsten Schritt eines Abladens des Kraftfahrzeugs von der Transportvorrichtung; und
- Fig.7: in einer schematischen perspektivischen Ansicht die fahrerlose Transportvorrichtung aus Fig.1 mit gekipptem Hubtisch; und
- Fig.8: in einer schematischen Vorderansicht die fahrerlose Transportvorrichtung in der in Fig.7 dargestellten Situation.

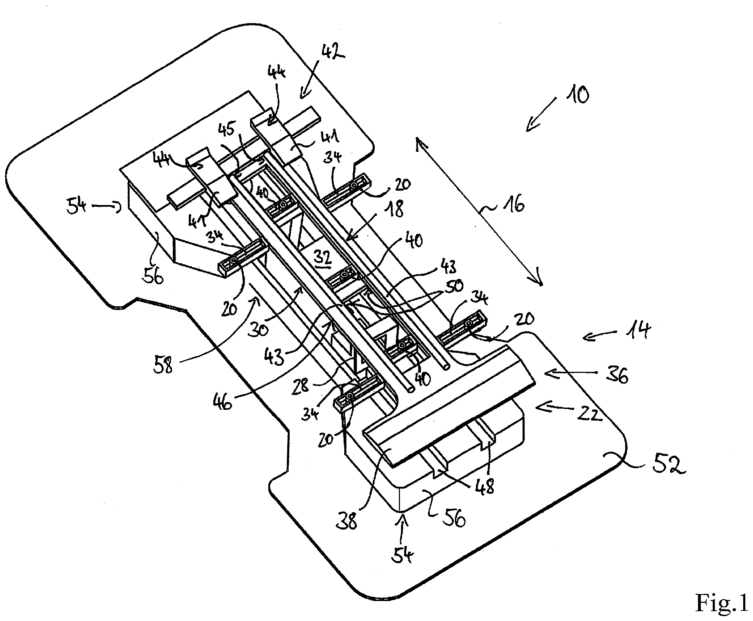

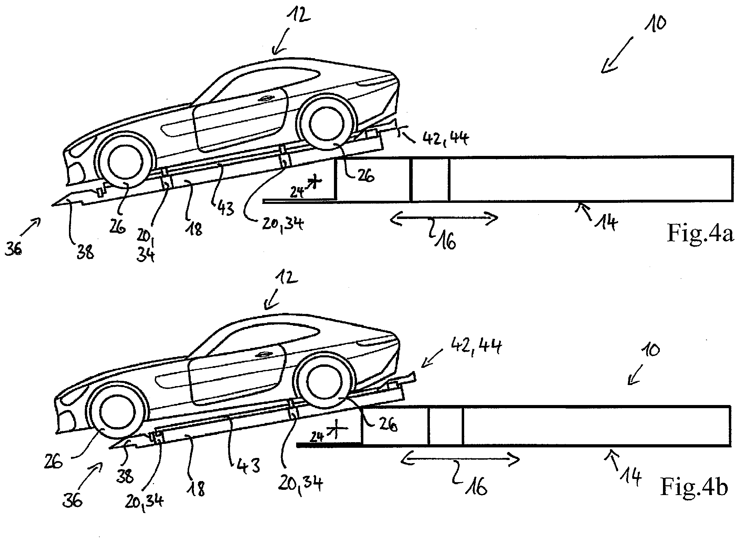

Figur 1 zeigt eine Ausführungsform einer fahrerlosen Transportvorrichtung 10 zur Montage eines Kraftfahrzeugs 12 (siehe Figuren 4 bis 6).

Die Transportvorrichtung 10 weist eine fahrbare Basis 14 und einen mit der Basis 14 gekoppelten und sich in einer Längsrichtung 16 erstreckenden Fahrzeugträger 18 auf.

Der Fahrzeugträger 18 weist außerdem betätigbare Aufnahmepunkte 20 zum Tragen des Kraftfahrzeugs 12 auf. Der Fahrzeugträger 18 ist entlang seiner Längsrichtung 16 mittels einer Führungseinrichtung 22 relativ zur Basis 14 verlagerbar und um eine orthogonal zur Längsrichtung 16 orientierte Achse 24 kippbar. Somit kann das zumindest teilmontierte Kraftfahrzeug 12 bei vom Kraftfahrzeug 12 gelösten Aufnahmepunkten 20 auf seinen eigenen Rädern 26 vom Fahrzeugträger 18 abfahren (vgl. Figuren 4 bis 6).

Der Fahrzeugträger 18 ist mittels eines relativ zur Basis 14 höhenverstellbaren Hubtisches 28 an der Basis 14 gekoppelt. Der Fahrzeugträger 18 ist mittels eines per Drehantrieb 30 relativ zur Basis 14 verschwenkbaren Hubtischkopfs 32 am Hubtisch 28 geführt.

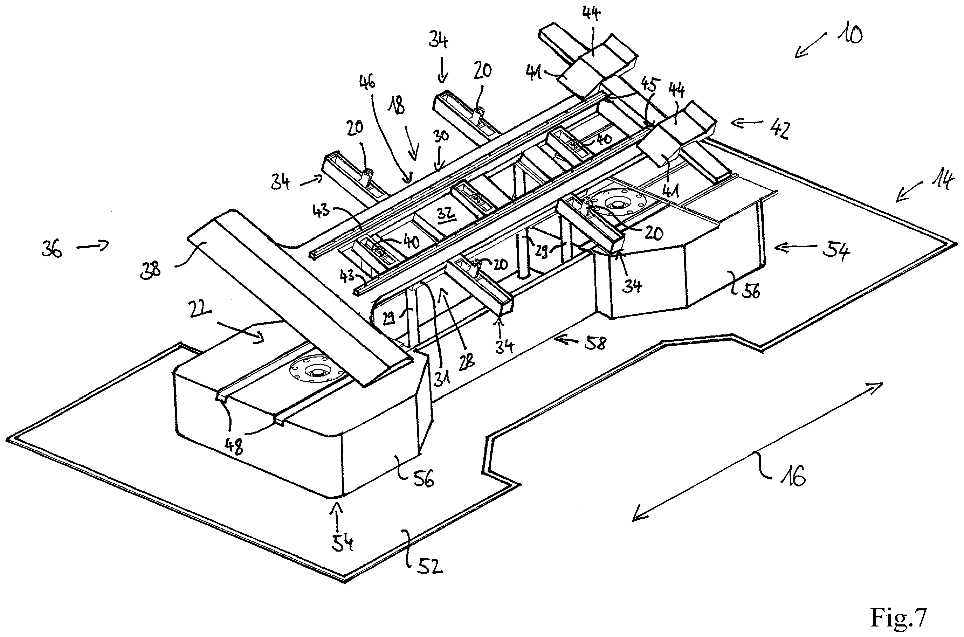

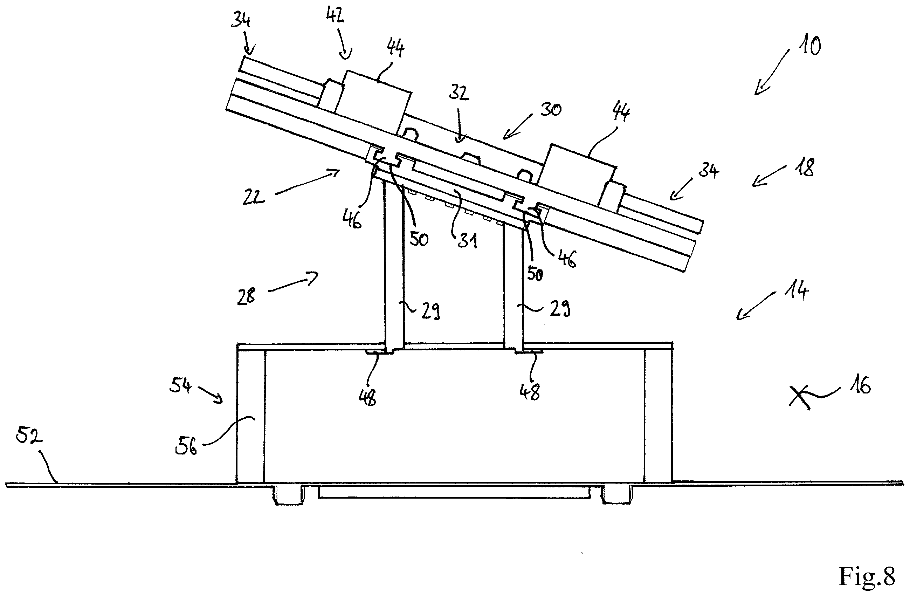

Der Hubtisch 28 ist relativ zur Basis 14 kippbar ausgebildet. Dabei ist der Hubtisch 28 um eine zur Längsrichtung 16 parallele Achse verschwenkbar oder kippbar. Damit kann der Hubtisch 28 und somit der Fahrzeugträger zu den Seiten der fahrbaren Basis 14 hin gekippt werden (siehe Fig.7 und 8). Ein Verkippen oder Verschwenken des Hubtisches erfolgt dabei durch unterschiedlich weites Ausfahren von Hubsäulen oder Hubzylindern 29, die "Tischbeine" des Hubtisches 28 bilden. Die Hubsäulen oder Hubzylinder 29 sind jeweils mittels eines Schwenklagers gelenkig am Tischflächenelement 31 gelagert sein.

Der Fahrzeugträger 18 weist zwei sich quer zur Längsrichtung 16 erstreckende und relativ zum Fahrzeugträger 18 in Längsrichtung 16 verschieblich geführte Querträger 34 auf (siehe Fig.1). An den Querträgern 34 sind die Aufnahmepunkte 20 angeordnet. Die Aufnahmepunkte 20 sind betätigbar und können vom Kraftfahrzeug 12 gelöst werden. Die Aufnahmepunkte 20 können beispielsweise Hubspindeln aufweisen.

Durch eine Verlagerung der Querträger 34 entlang der Längsrichtung 16 des Fahrzeugträgers 18 kann eine aktive Förderung des Kraftfahrzeugs 12 erfolgen, wodurch ein Abfahren des Kraftfahrzeugs 12 vom Fahrzeugträger 18 unterstützt wird.

Der Fahrzeugträger 18 weist an einem, insbesondere am abkippbaren, Ende 36 einen sich verjüngenden, als Abfahrrampe dienenden Abschnitt 38 auf. Damit kann das Kraftfahrzeug 12 vom Fahrzeugträger 18 abfahren (vgl. Figuren 4 bis 6).

Der Fahrzeugträger 18 weist Halter 40 für zu montierende Komponenten des Kraftfahrzeugs 12 auf. Die Halter 40 können ebenso wie die Querträger 34 verschieblich am Fahrzeugträger 18 geführt sein. Die Halter 40 lassen sich somit, ebenso wie die Querträger 34, an verschiedene Kraftfahrzeuge 12 einstellen.

Der Fahrzeugträger 18 weist einen in Längsrichtung 16 verfahrbaren Schlitten 42 mit zwei Radaufnahmen 44 auf. Die Radaufnahmen 44 können als Sicherungs-/Unterfahrkeil ausgebildet sein und sind in Längsrichtung des Schlittens 42 verstellbar oder verschiebbar. Der Schlitten 42 dient zum Verlagern des Kraftfahrzeugs 12 relativ zum Fahrzeugträger 18. Die Radaufnahmen 44 können einen Keilabschnitt 41 aufweisen, über die das Kraftfahrzeug 12 von den Radaufnahmen 44 abfahren kann. Der Schlitten 42 ist über am Fahrzeugträger 18 angeordnete Schlittenschienen 43 und am Schlitten 42 angeordnete Schlittenführungen 45 verschieblich geführt.

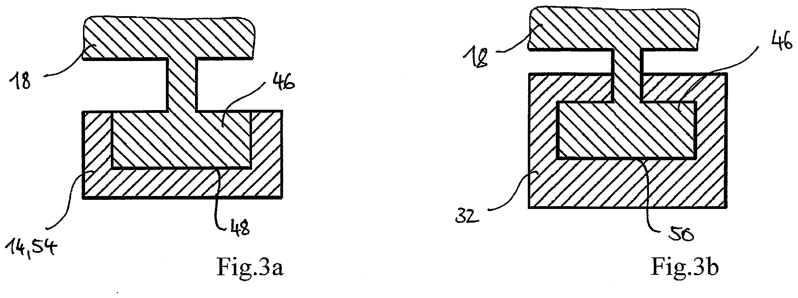

Die Führungseinrichtung 22 weist zwei am Fahrzeugträger 18 angeordnete Profilschienen 46 und zwei an der Basis 14 angeordnete Ausnehmungen 48 zur jeweiligen Führung einer der Profilschienen 46 auf (vgl. Figur 3a). Auf diese Weise kann der Fahrzeugträger 18 relativ zur Basis 14 in Längsrichtung verschoben und relativ zur Basis 14 gekippt werden, da die Ausnehmung 48 eine konstante Breite aufweist oder "nach oben hin" offen ist.

Die Führungseinrichtung 22 weist zudem eine am Hubtisch 28, insbesondere am Hubtischkopf 32, angeordnete, zur Profilschiene 46 komplementäre Aufnahme 50 auf, die lediglich eine Längsverschiebung der Profilschiene 46 erlaubt. Dabei kommt es zu einem Hintergriff zwischen Profilschiene 46 und Aufnahme 50.

Im Hinblick auf ein Abkippen des Fahrzeugträgers 18 mit einfachen konstruktiven Mitteln ist es von Vorteil, wenn sich die Profilschiene 46 nicht über die vollständige Verlagerungslänge des Fahrzeugträgers 18 erstreckt, sondern in einem - in Längsrichtung 16 gesehen - mittleren Bereich des Fahrzeugträgers 18, beispielsweise in den mittleren 40 bis 60 Prozent der Verlagerungslänge des Fahrzeugträgers 18.

Die Basis 14 weist eine umlaufende Plattform 52 für Personal, Werkzeug und/oder zu montierende Komponenten auf. Damit können auch während eines Verfahrens der Transportvorrichtung 10 Montagearbeiten am Kraftfahrzeug 12 erfolgen.

Die fahrbare Basis 14 weist zwei Radachsen mit jeweils zwei individuell, insbesondere radselektiv, antreibbaren Rädern und/oder einen Energiespeicher zur Energieversorgung auf (jeweils ohne Bezugszeichen). Die Radachsen sind in Antriebsabschnitten 54 angeordnet, die mittels Gehäuseabschnitten 56 verkleidet sind.

Zwischen den Antriebsabschnitten 54 erstreckt sich ein Verbindungsabschnitt 58 der Basis 14. Im Verbindungsabschnitt 58 ist der Hubtisch 28 angeordnet.

Das Verfahren zum Abladen eines Kraftfahrzeugs 12 von einer zur Montage eines Kraftfahrzeugs 12 dienenden fahrerlosen Transportvorrichtung 10 läuft folgendermaßen ab (vgl. Figuren 4 bis 6):
Zunächst erfolgt ein Verlagern eines sich in einer Längsrichtung erstreckenden und das Kraftfahrzeug 12 mittels Aufnahmepunkten 20 tragenden Fahrzeugträgers 18 relativ zu einer fahrbaren Basis 14 entlang seiner Längsrichtung 16 (in Figur 4a bereits erfolgt).

Zudem wird der Fahrzeugträger 18 um eine sich orthogonal zur Längsrichtung 16 erstreckende Achse 24 gekippt (in Figur 4a ebenfalls bereits erfolgt).

Weiter erfolgt ein Lösen der Aufnahmepunkte 20 vom Kraftfahrzeug 12 (vgl. Figur 4a bis 5b).

Schließlich erfolgt ein Abfahren des zumindest teilmontierten Kraftfahrzeugs 12 auf seinen eigenen Rädern 26 (vgl. Figur 4b bis Figur 6b).

Hiermit lässt sich ein Kraftfahrzeug auf einfache Weise von einer zur Montage des Kraftfahrzeugs 12 dienenden Transportvorrichtung 10 abladen, beispielsweise auf einen Untergrund, oder auf eine andere Ebene überladen, beispielsweise auf oder in eine Lagereinrichtung.

Zur Verdeutlichung der in Figuren 4 bis 6 dargestellten Abladeschritte noch Folgendes:
In Figur 4a ist der Fahrzeugträger vom Hubtisch 28 entkoppelt, in die vordere Endposition verfahren und bereits um die sich quer zur Längsrichtung 16 erstreckende Achse 24 abgekippt oder abgeklappt.

Die Querträger 34 fahren dann, insbesondere synchron, nach vorne, bis die Räder 26 einer ersten Achse des Kraftfahrzeugs 12, insbesondere die Vorderräder 26 einer Vorderachse des Kraftfahrzeugs 12, Kontakt mit dem Rampenabschnitt 38 des Fahrzeugträgers 18 bekommen und infolgedessen die Radaufhängung an der ersten Achse, insbesondere der Vorderachse, des Kraftfahrzeugs einfedert. Die Hubspindeln der Aufnahmepunkte 20 der vorderen Querträger 34 werden eingefahren. Damit steht das Kraftfahrzeug 12 an einer ersten Achse, insbesondere an der Vorderachse, bereits auf seinen Rädern 26 (vgl. Figur 4b).

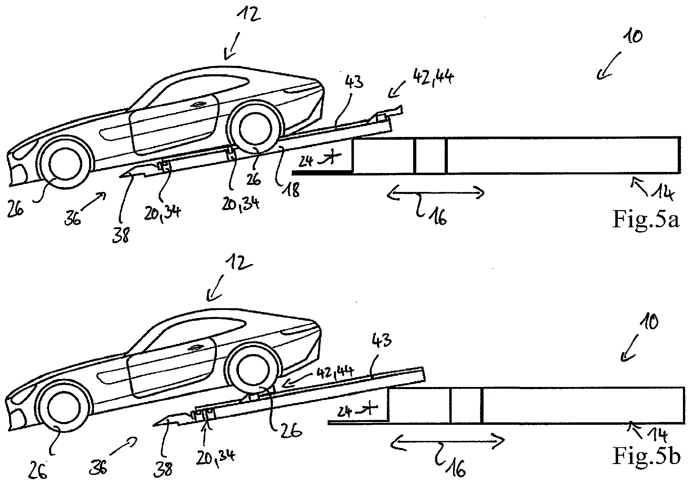

Im Weiteren werden die hinteren Querträger 34 vorgefahren, so dass die erste Achse, insbesondere die Vorderachse, des Kraftfahrzeugs 12 auf dem Boden abrollt (vgl. Figur 5a).

Zudem wird der Schlitten 42 mit den Radaufnahmen 44 oder Unterfahrkeilen 44 in Richtung des abkippbaren Endes 36 verfahren. Die Keilabschnitte der Radaufnahmen 44 werden unter die Räder 26 einer zweiten Achse, insbesondere der Hinterachse, des Kraftfahrzeugs 12 geschoben, wodurch die Radaufhängung an der zweiten Achse, insbesondere der Hinterachse, einfedert und das Kraftfahrzeug 12 von den hinteren Querträgern 34 entkoppelt wird. Der hintere Querträger 34 fährt in die vordere Endposition (vgl. Figur 5b) .

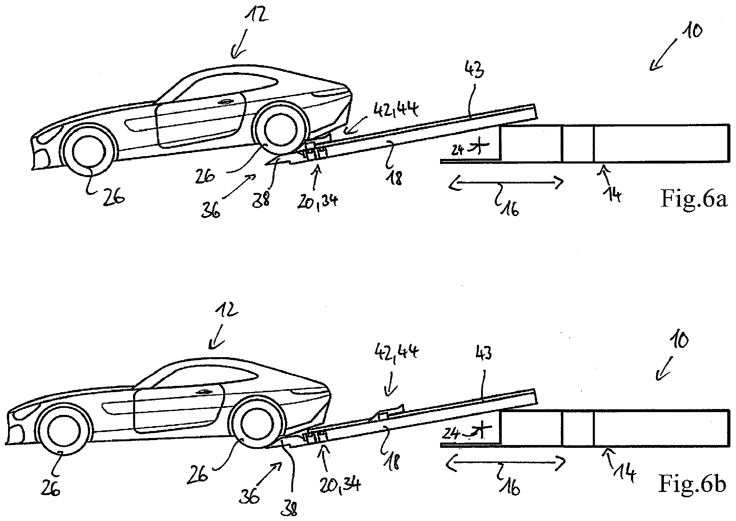

Im Weiteren fährt der Schlitten 42 in die vordere Endposition, bis die Radaufnahmen 44 direkt über dem Rampenabschnitt der Radaufnahmen 44 stehen. Die zweite Achse, insbesondere die Hinterachse, des Kraftfahrzeugs 12 kann dann über den Rampenabschnitt 38 abrollen. Das Kraftfahrzeug 12 ist damit von der Transportvorrichtung 10 und vom Fahrzeugträger 18 abgeladen (vgl. Figuren 6a, 6b).

Wenngleich im vorliegenden Ausführungsbeispiel das Kraftfahrzeug 12 mit seiner Front in Richtung des abkippbaren Endes 36 des Fahrzeugträgers 18 orientiert ist, ist auch eine umgekehrte Anordnung des Kraftfahrzeugs 12 mit seinem Heck am abkippbaren Ende 36 des Fahrzeugträgers 18 denkbar. Das Kraftfahrzeug 12 würde dann, beginnend mit seinem Heck, rückwärts vom Fahrzeugträger 18 abfahren.

## Patentansprüche

1. Fahrerlose Transportvorrichtung (10) zur Montage eines Kraftfahrzeugs (12), mit einer fahrbaren Basis (14) und einem mit der Basis (14) gekoppelten und sich in einer Längsrichtung (16) erstreckenden Fahrzeugträger (18), wobei der Fahrzeugträger (18) betätigbare Aufnahmepunkte (20) zum Tragen des Kraftfahrzeugs (12) aufweist, wobei der Fahrzeugträger (18) entlang seiner Längsrichtung (16) mittels einer Führungseinrichtung (22) relativ zur Basis (14) verlagerbar ist, **dadurch gekennzeichnet, dass** der Fahrzeugträger (18) um eine orthogonal zur Längsrichtung (16) orientierte Achse (24) kippbar ist, so dass das zumindest teilmontierte Kraftfahrzeug (12) bei vom Kraftfahrzeug (12) gelösten Aufnahmepunkten (20) auf seinen eigenen Rädern (26) vom Fahrzeugträger (18) abfahren kann.

2. Transportvorrichtung (10) nach Anspruch 1, **dadurch gekennzeichnet, dass** der Fahrzeugträger (18) mittels eines relativ zur Basis (14) höhenverstellbaren Hubtisches (28) an der Basis (14) gekoppelt ist und/oder dass der Fahrzeugträger (18) mittels eines Hubtischkopfs (32) am Hubtisch (28) geführt ist.

3. Transportvorrichtung (10) nach Anspruch 2, **dadurch gekennzeichnet, dass** der Hubtisch (28) relativ zur Basis (14) kippbar ausgebildet ist.

4. Transportvorrichtung (10) nach einem der vorhergehenden Ansprüche, **dadurch gekennzeichnet, dass** der Fahrzeugträger (18) mindestens einen sich quer oder schräg zur Längsrichtung (16) erstreckenden und relativ zum Fahrzeugträger (18) in Längsrichtung (16) verschieblich geführten Querträger (34) aufweist, an dem die Aufnahmepunkte (20) angeordnet sind.

5. Transportvorrichtung (10) nach einem der vorhergehenden Ansprüche, **dadurch gekennzeichnet, dass** der Fahrzeugträger (18) an einem Ende (36) einen sich verjüngenden, als Abfahrrampe dienenden Abschnitt (38) aufweist und/oder dass der Fahrzeugträger (18) Halter (40) für zu montierende Komponenten des Kraftfahrzeugs (12) aufweist.

6. Transportvorrichtung (10) nach einem der vorhergehenden Ansprüche, **dadurch gekennzeichnet, dass** der Fahrzeugträger (18) einen in Längsrichtung (16) verfahrbaren Schlitten (42) mit mindestens einer Radaufnahme (44) zum Verlagern des Kraftfahrzeugs (12) relativ zum Fahrzeugträger (18) aufweist.

7. Transportvorrichtung (10) nach einem der vorhergehenden Ansprüche, **dadurch gekennzeichnet, dass** die Führungseinrichtung (22) eine am Fahrzeugträger (18) angeordnete Profilschiene (46) und eine an der Basis (14) angeordnete Ausnehmung (48) zur Führung der Profilschiene (46) aufweist.

8. Transportvorrichtung (10) nach Anspruch 2 und 7, **dadurch gekennzeichnet, dass** die Führungseinrichtung (22) eine am Hubtisch (28) angeordnete, zur Profilschiene (46) komplementäre Aufnahme (50) aufweist, die lediglich eine Längsverschiebung der Profilschiene (46) erlaubt.

9. Transportvorrichtung (10) nach einem der vorhergehenden Ansprüche, **dadurch gekennzeichnet, dass** die Basis (14) an mindestens zwei Seiten eine Plattform (52) für Personal, Werkzeug und/oder zu montierende Komponenten aufweist.

10. Transportvorrichtung (10) nach einem der vorhergehenden Ansprüche, **dadurch gekennzeichnet, dass** die Basis (14) mindestens zwei Radachsen mit jeweils zwei individuell antreibbaren Rädern und/oder einen Energiespeicher zur Energieversorgung aufweist.

11. Verfahren zum Abladen eines Kraftfahrzeugs (12) von einer zur Montage des Kraftfahrzeugs (12) dienenden fahrerlosen Transportvorrichtung (10) nach einem der vorhergehenden Ansprüche, das Verfahren umfassend folgende Schritte:
- Verlagern eines sich in einer Längsrichtung (16) erstreckenden und das Kraftfahrzeug (12) mittels Aufnahmepunkten (20) tragenden Fahrzeugträgers (18) relativ zu einer fahrbaren Basis (14) entlang seiner Längsrichtung (16),
- optional Kippen des Fahrzeugträgers (18) um eine sich orthogonal zur Längsrichtung (16) erstreckende Achse (24),
- Lösen der Aufnahmepunkte (20) vom Kraftfahrzeug (12), und
- Abfahren des zumindest teilmontierten Kraftfahrzeugs (12) auf seinen eigenen Rädern (26).

## Claims

1. Driverless transport device (10) for assembling a motor vehicle (12), comprising a drivable base (14) and a vehicle carrier (18) coupled to the base (14) and extending in a longitudinal direction (16), wherein the vehicle carrier (18) has actuatable holding points (20) for carrying the motor vehicle (12), wherein the vehicle carrier (18) can be moved along its longitudinal direction (16) relative to the base (14) by means of a guide device (22), **characterized in that** the vehicle carrier (18) can be tilted around an axis (24) oriented orthogonally to the longitudinal direction (16), such that the at least partially assembled motor vehicle (12) can drive off of the vehicle carrier (18) on its own wheels (26) when holding points (20) are released from the motor vehicle (12).

2. Transport device (10) according to claim 1, **characterized in that** the vehicle carrier (18) is coupled to the base (14) by means of a lift table (28) that is adjustable in height relative to the base (14), and/or **in that** the vehicle carrier (18) is guided on the lift table (28) by means of a lift table top (32).

3. Transport device (10) according to claim 2, **characterized in that** the lift table (28) is configured so as to be tiltable relative to the base (14).

4. Transport device (10) according to any of the preceding claims, **characterized in that** the vehicle carrier (18) comprises at least one crossbar (34) that extends transversely or obliquely to the longitudinal direction (16) and is displaceably guided in the longitudinal direction (16) relative to the vehicle carrier (18), and wherein on said crossbar (34) the holding points (20) are arranged.

5. Transport device (10) according to any of the preceding claims, **characterized in that** the vehicle carrier (18) on one end (36) comprises a tapering portion (38) that functions as a drive-off ramp, and/or **in that** the vehicle carrier (18) comprises holders (40) for components of the motor vehicle (12) that are to be assembled.

6. Transport device (10) according to any of the preceding claims, **characterized in that** the vehicle carrier (18) comprises a carriage (42) that is movable in the longitudinal direction (16) and comprises at least one wheel support (44) for moving the motor vehicle (12) relative to the vehicle carrier (18).

7. Transport device (10) according to any of the preceding claims, **characterized in that** the guide device (22) comprises a profile rail (46) arranged on the vehicle carrier (18), and a recess (48) that is arranged in the base (14) and is intended for guiding the profile rail (46) .

8. Transport device (10) according to claim 2 and claim 7, **characterized in that** the guide device (22) comprises a seat (50) that is arranged in the lift table (28), wherein said seat (50) is complementary to the profile rail (46), and allows only a longitudinal displacement of the profile rail (46).

9. Transport device (10) according to any of the preceding claims, **characterized in that** the base (14) on at least two sides comprises a platform (52) for workers, tools and/or components to be assembled.

10. Transport device (10) according to any of the preceding claims, **characterized in that** the base (14) comprises at least two wheel axles that each comprise two individually drivable wheels and/or an energy store for supplying power.

11. Method for unloading a motor vehicle (12) from a driverless transport device (10) according to any of the preceding claims, wherein the transport device (10) functions to assemble the motor vehicle (12), the method comprising the following steps:
- moving a vehicle carrier (18), extending in a longitudinal direction (16) and carrying the motor vehicle (12) by means of holding points (20), along its longitudinal direction (16) relative to a drivable base (14),
- optionally tilting the vehicle carrier (18) around an axis (24) extending orthogonally to the longitudinal direction (16),
- releasing the holding points (20) from the motor vehicle (12), and
- driving the at least partially assembled motor vehicle (12) off on its own wheels (26).

## Revendications

1. Dispositif de transport sans conducteur (10) pour permettre le montage d'un véhicule automobile (12) comprenant une base déplaçable (14) ainsi qu'un support de véhicule (18) couplé à la base (14) et s'étendant dans une direction longitudinale (16), le support de véhicule (18) comprenant des points de réception actionnables (20) permettant de porter le véhicule (12), le support de véhicule (18) pouvant être déplacé par rapport à la base (14) le long de sa direction longitudinale (16) au moyen d'un dispositif de guidage (22), **caractérisé en ce que** le support de véhicule (18) peut être basculé autour d'un axe (24) orienté perpendiculairement à la direction longitudinale (16), de sorte que, lorsque les points de réception (20) sont dégagés du véhicule (12), ce véhicule (12) au moins partiellement monté puisse descendre du support de véhicule (18) sur ses propres roues (26).

2. Dispositif de transport (10) conforme à la revendication 1, **caractérisé en ce que** le support de véhicule (18) est couplé à la base (14) au moyen d'une table de levage (18) réglable en hauteur par rapport à la base (14), et/ou le support de véhicule (18) est guidé sur la table de levage (28) au moyen d'une tête de table de levage (32).

3. Dispositif de transport (10) conforme à la revendication 2, **caractérisé en ce que** la table de levage (28) peut être basculée par rapport à la base (14).

4. Dispositif de transport (10) conforme à l'une des revendications précédentes, **caractérisé en ce que** le support de véhicule (18) comporte au moins une traverse (34) s'étendant transversalement ou obliquement par rapport à la direction longitudinale (16) et mobile en translation dans la direction longitudinale (16) par rapport au support de véhicule (18), sur laquelle sont installés les points de réception (20).

5. Dispositif de transport (10) conforme à l'une des revendications précédentes, **caractérisé en ce que** le support de véhicule (18) comporte à une extrémité (36) un segment (38) qui s'amincit servant de rampe de descente, et/ou le support de véhicule (18) comporte un organe de support (40) pour des composants à monter du véhicule (12) .

6. Dispositif de transport (10) conforme à l'une des revendications précédentes, **caractérisé en ce que** le support de véhicule (18) comporte un chariot (42) mobile dans la direction longitudinale (16) ayant au moins un logement de réception de roue (44) permettant de déplacer le véhicule (12) par rapport à ce support de véhicule (18) .

7. Dispositif de transport (10) conforme à l'une des revendications précédentes, **caractérisé en ce que** le dispositif de guidage (22) comporte un rail profilé (46) monté sur le support de véhicule (18) et un évidement (48) situé sur la base (14) pour permettre de guider le rail profilé (46).

8. Dispositif de transport (10) selon les revendications 2 et 7, **caractérisé en ce que** le dispositif de guidage (22) comporte un logement de réception (50) complémentaire du rail profilé (46) installé sur la table de levage (28) qui permet uniquement un déplacement longitudinal de ce rail profilé (46).

9. Dispositif de transport (10) conforme à l'une des revendications précédentes, **caractérisé en ce que** la base (14) comporte, sur au moins deux côtés une plateforme (52) pour le personnel, un outil et/ou des composants à monter.

10. Dispositif de transport (10) conforme à l'une des revendications précédentes, **caractérisé en ce que** la base (14) comprend au moins deux essieux de roues ayant chacun deux roues actionnables individuellement et/ou un accumulateur d'énergie pour permettre une alimentation en énergie.

11. Procédé permettant de décharger un véhicule (12) d'un dispositif de transport sans conducteur (10) servant au montage de ce véhicule (12) conforme à l'une des revendications précédentes comprenant les étapes suivantes consistant à:
- déplacer un support de véhicule (18) s'étendant dans une direction longitudinale (16) et portant le véhicule (12) au moyen de points de réception (20) par rapport à une base mobile (14) le long de sa direction longitudinale (16),
- le cas échéant basculer le support de véhicule (18) autour d'un axe (24) s'étendant perpendiculairement à la direction longitudinale (16),
- dégager les points de réception (20) du véhicule (12), et
- descendre le véhicule (12) au moins partiellement monté sur ses propres roues (26).
